# EUROPÄISCHE PATENTSCHRIFT

(11) **EP 3 744 752 B1**
(45) Veröffentlichungstag und Bekanntmachung des Hinweises auf die Patenterteilung: **16.10.2024**
(21) Anmeldenummer: 20174622.9
(22) Anmeldetag: 14.05.2020
(51) Int. Cl.: C08G 77/08, C08G 77/18, B01D 19/04

(54) **VERFAHREN ZUR HERSTELLUNG VON NICHTCYCLISCHEN ALKOXYFUNKTIONELLEN POLYSILOXANEN**
METHOD FOR THE PREPARATION OF NON-CYCLIC ALKOXYFUNCTIONAL POLYSILOXANES
PROCÉDÉ DE FABRICATION DE POLYSILOXANES À FONCTION ALKOXY NON CYCLIQUES

(30) Priorität: 28.05.2019 EP 19176885
(43) Veröffentlichungstag der Anmeldung: 02.12.2020
(73) Patentinhaber: Evonik Operations GmbH, 45128 Essen (DE)
(72) Erfinder: Favresse, Philippe, 40880 Ratingen (DE); Fiedel, Michael, 45239 Essen (DE); Hesse, Ute, 45357 Essen (DE)
(74) Vertreter: Evonik Patent Association

(56) Entgegenhaltungen:
- EP-A1- 3 022 248
- EP-A1- 3 438 158
- EP-B1- 3 022 248
- DE-A1- 2 413 987

## Beschreibung

Die Erfindung betrifft ein Verfahren zur Herstellung eines Reaktionsprodukts, das ein nichtzyklisches alkoxyfunktionelles Polysiloxan enthält, sowie deren Verwendung zur Herstellung SiOC-basierter Siliziumverbindungen, insbesondere zur Herstellung SiOC-basierter Polyethersiloxane.

SiOC-basierte Polyethersiloxane sind bekannte Bestandteile von Entschäumern, die zur Entschäumung wässriger und nichtwässriger Medien eine besondere Wirksamkeit und Stabilität zeigen. Dazu zählen sowohl die Schauminhibierung, die Entschäumung, eine sehr gute Langzeitstabilität, als auch die hervorragende Verträglichkeit in wässrigen und nicht wässrigen Medien. Alle diese Eigenschaften sind für moderne Lackanwendungen von hoher Bedeutung.

Der Begriff Entschäumer umfasst im vorliegenden Fall sowohl Produkte als auch Formulierungen, die Schaum verhindern, als auch solche, die Schaum zerstören sowie eine Entlüftung ermöglichen. In der Praxis sind die Übergänge zwischen diesen Produkten fließend, so dass hier der gemeinsame Sammelbegriff Entschäumer verwendet wird.

In vielen technischen Verfahren, insbesondere, wenn in wässrigen Medien gearbeitet wird, ist es notwendig, die unerwünschte Bildung von Schaum während der Herstellungs- oder Verarbeitungsprozesse zurückzudrängen oder ganz zu unterbinden, da Schaum bzw. Schaumkronen, die sich bei Rühr- und Dispergiervorgängen oder in den Gebinden während des Abfüllvorganges ansammeln, die Produktionszeiten verlängern oder aber das Effektivvolumen der Anlage vermindern bzw. deren korrekte Arbeit sogar verhindern können (Überlaufen, fehlende Farbübertragung).

Dies kann erreicht werden, indem man Entschäumer hinzugibt, die schon bei sehr geringen Einsatzkonzentrationen ab etwa 0,001 Gew.-% in der Lage sind, unerwünschte Schäume zu vermeiden oder zu zerstören und gleichzeitig nach der Applikation der Systeme keine Oberflächenstörungen hervorzurufen. In der Praxis muss dieser letztere Faktor mindestens ebenso berücksichtigt werden wie eine gute Entschäumung.

Unter Oberflächenstörungen sind für den Anwender unerwünschte Eigenschaften wie beispielsweise Pinholes, Krater, Glanzverlust, Orangenschaleneffekt, Runzelbildung und Haftungsverlust im Beschichtungssystem zu verstehen. Für den Anwender ist aber auch eine entsprechende Langzeitstabilität der Formulierungen sehr wichtig, da oftmals Produkte wie Farben nicht umgehend, sondern mitunter erst nach längerer Lagerung verbraucht werden. Bei Lagerung unter extremen klimatischen Bedingungen (Hitze und Sonneneinstrahlung) kann mitunter die Wirksamkeit einer Entschäumerformulierung schon nach kurzer Zeit zusammenbrechen.

DE 24 13 987 A1 offenbart die Verwendung von nichtzyklischen alkoxyfunktionellen Siloxanen zur Herstellung von Polyethersiloxanen, insbesondere für die Herstellung von Polyurethanschaumstabilisatoren.

Zur Herstellung der wirtschaftlich bedeutsamen Klasse der SiOC-basierten Polyethersiloxane, auch als Siliconpolyether oder Siloxan-Polyether-Copolymere bezeichnet, bedient man sich nach heutigem Stand der Technik mehrerer Verfahrensvarianten.

Dem Fachmann ist bekannt, dass es bei diesen SiOC-verknüpften Polyethersiloxanen um eine Produktklasse handelt, die nicht zum Verharzen neigen. Auch wenn SiOC-verknüpfte Polyethersiloxane reaktive Gruppen, wie etwa Hydroxygruppen, enthalten, so werden sie nicht zur gezielten Vernetzung eingesetzt. Sie sind nicht filmbildend im Gegensatz zu Silikonharzen.

Klassischerweise werden SiOC-Verknüpfungen durch die Reaktion eines Siloxans mit einer am Siliciumatom gebundenen Abgangsgruppe (z.B. Halogen) und einem Alkohol oder Polyetherol gebildet. Letzterer wird üblicherweise zuvor durch Alkoxylierung von monohydroxyfunktionellen Startverbindungen wie zum Beispiel Butanol mit Alkylenoxiden gewonnen. Besonders Chlorsiloxane sind als Ausgangsverbindungen für diesen Reaktionstyp verbreitet. Chlorsiloxane sind jedoch schwierig zu handhaben, da sie äußerst reaktionsfreudig sind. Ihr Einsatz ist weiterhin mit dem Nachteil verbunden, dass der im Verlauf der Reaktion gebildete Chlorwasserstoff eine Handhabung auf korrosionsbeständige Anlagen beschränkt und zu ökologischen Problemen führt. Darüber hinaus können in Gegenwart von Chlorsiloxanen und Alkoholen bzw. Polyetherolen organische Chlorverbindungen entstehen, die aus toxikologischen Gründen nicht wünschenswert sind. Weiterhin ist es nicht einfach, bei der Reaktion eines Chlorsiloxans mit einem Alkohol oder Polyetherol einen quantitativen Umsatz zu erreichen, so dass die OH-funktionelle Komponente oft in einem stöchiometrischen Überschuss bezogen auf die SiCl-Funktionen der Siloxankomponente eingesetzt werden muss. Die Verwendung eines Polyetherüberschusses bedeutet in der Praxis, dass in den so hergestellten Siliconpolyethern unvermeidbar größere Mengen an unreagierten Überschusspolyethern enthalten sind, die die Konzentration der tensidisch wirksamen Siliconpolyether herabsetzen und die anwendungstechnischen Eigenschaften der Zielprodukte beeinträchtigen. Häufig müssen bei der Chlorsiloxanroute Basen als HCl-Fänger eingesetzt werden, um gute Umsätze zu erzielen. Durch Einsatz dieser Basen entstehen große Salzmengen, deren Entfernung im industriellen Maßstab Schwierigkeiten bereitet.

Zyklische Siloxane wie Hexamethylzyklotrisiloxan, Octamethylzyklotetrasiloxan und Decamethylzyklopentasiloxan können durch Katalyse mit Lewis- oder Brönsted Säuren zu linearen, langkettigen reaktiven Siloxanen polymerisiert werden, wie z. B. in W. Noll, Chemie und Technologie der Silicone, Verlag Chemie GmbH, Weinheim, 1968 dargestellt wird.

Des Weiteren ist bekannt, ein Reaktivprodukt wie etwa ein Methoxy-terminiertes Polydiorganosiloxan zur Herstellung von vernetzbaren Polyorganopolysiloxanen einzusetzen, welches aus Hexamethylzyklotrisiloxan (D3) und 1,4,6-trimethyl-2,4,6-trivinylzyklotrisiloxan (V3) mit Tetramethoxysilan (TMOS) in Gegenwart von Trifluormehtansulfonsäure hergestellt wird. ("Cationic Telomerization of Hexamethylcyclotrisiloxane (03) with Silanes Containing Alkoxy, Aryloxy and Acyloxy functions bound to Silicon", European Polymer Journal, Vol. 17, No. 4, 1981, pages 413 - 419).

Die EP 3 022 248 B1 offenbart ein Verfahren zur Herstellung eines nichtzyklischen hydrocarbonoxyfunktionellen Polyorganosiloxans durch Erwärmen einer Zusammensetzung aus zyklischen Polyorganosiloxanen, einem Silan und einem Metalltriflat, wobei das Metallatom ausgewählt ist aus Aluminium (Al), Bismut (Bi), Eisen (Fe), Gallium (Ga), Indium (In), Scandium (Sc), Samarium (Sm) und Ytterbium (Yb).

Im Rahmen umfangreicher Untersuchungen konnten die Erfinder feststellen, dass bei der Katalyse auf ein bestimmtes Katalysatorsystem ankommt. Aufgabe der Erfindung ist demnach, ein Verfahren bereitzustellen, mit dem nichtzyklischen alkoxyfunktionellen Polysiloxanen hergestellt werden kann, ohne dass Katalysatoren mit korrosiver Wirkung gegenüber Metallen oder Katalysatoren enthaltend Schwermetalle eingesetzt werden.

In diesem Zusammenhang wurde erfindungsgemäß in völlig überraschender Weise gefunden, dass ein Verfahren zur Herstellung eines Reaktionsprodukts, das ein nichtzyklisches alkoxyfunktionelles Polysiloxan enthält, durch Erwärmen eines Reaktionssystems umfassend:
(A) ein zyklisches Polyorganosiloxan der Formel [(R¹₂SiO)_{2/2}]ₙ, wobei das tiefgestellte n eine ganze Zahl von mindestens 4 ist und jedes R¹ eine Alkylgruppe oder Arylgruppe ist;
(B) ein Silan der Formel R²₍₄₋ₘ₎Si(OR³)ₘ, wobei das tiefgestellte m eine ganze Zahl von 1 bis 4 ist, jedes R² unabhängig eine Alkylgruppe oder Arylgruppe, eine Hydrocarbylgruppe oder eine halogenierte Hydrocarbylgruppe ist und jedes R³ unabhängig eine Alkylgruppe ist; und
(C) ein Katalysatorsystem umfassend ein Metall-Trifluormethansulfonat der Formel [M]⁺[CF₃SO₃]⁻, wobei M ein Metallatom ist, ausgewählt aus Natrium (Na) und Kalium (K) und eine Brönsted Säure,

wobei Brönsted Säuren mit einem pKa-Wert ≤ 3,0, bevorzugt mit einem pKa-Wert ≤ 2,0, besonders bevorzugt mit einem pKa-Wert ≤ - 0,0 eingesetzt werden,
die Aufgabe hervorragend löst.

Es war völlig überraschend gewesen, dass die säurekatalysierte Ringöffnung des zyklischen Polyorganosiloxans durch das erfindungsgemäße Katalysatorsystem umfassend ein Metall-Trifluormethansulfonat der Formel [M]⁺[CF₃SO₃⁻], wobei M ein Metallatom ist, ausgewählt aus Natrium (Na) und Kalium (K) und einer Brönsted Säure überhaupt ermöglicht.

Trifluormethansulfonatsalze, Metall-Trifluormethansulfonate, Triflate, Metalltriflate werden hier als Synonyme verstanden.

Bevorzugt liegt das molare Mengenverhältnis von eingesetzter Brönsted Säure zu Metall-Trifluormethansulfonat im Bereich von 1:10 bis 10:1, bevorzugt von 1:5 bis 5:1 besonders bevorzugt von1:2 bis 2:1

Bevorzugte Co-Katalysatoren sind Brönsted-Säuren. Beispiele für geeignete Brönsted-Säuren sind Carbonsäuren, wie beispielsweise Trifluoressigsäure Sulfonsäuren, wie beispielsweise Methansulfonsäure, p-Toluosulfonsäure und Dodecylbenzolsulfonsäure, Mineralsäuren, wie beispielsweise Salzsäure, Salpetersäure, Schwefelsäure und Phosphorsäure.

Die erfindungsgemäß besonders bevorzugt einzusetzende Brönsted Säure ist eine Methansulfonsäure, Schwefelsäure, Phosphorsäure, Trifluoressigsäure und p-Toluolsulfonsäure. Die Erfinder haben festgestellt, dass eine säurekatalysierte Ringöffnung des zyklischen Polyorganosiloxans nur mit Na-Triflaten oder K-Triflaten bzw. nur Methansulfonsäure nicht gelingt, jedoch eine Mischung aus Na-Triflaten oder K-Triflaten und Methansulfonsäuren. Somit liegt der Vorteil darin, dass auf korrosive Katalysatoren wie AI-Triflate oder Eisen-Triflate verzichtet werden kann. Auch der Einsatz von schwermetallhaltigen Katalysatoren wie Galliumtriflate, Scandiumtriflate, Chromiumtriflate ist ein weiterer vorteilhafter Aspekt der Erfindung.

Vorzugsweise handelt es sich bei den Silanen um Dimethyldialkoxysilane (wie z.B. Diethoxydimethylsilan und Dimethoxydimethylsilan), Methyltrialkoxysilane (wie z.B. Triethoxymethylsilan und Trimethoxymethylsilane) und Tetraalkoxysilane (Tetraethoxysilan und Tetramethoxysilan).

Wenn im Rahmen der Erfindung zyklische Polyorganosiloxane eingesetzt werden, insbesondere umfassend D₄ (Oktamethylzyklotetrasiloxan), D₅ (Dekamethylzyklopentasiloxan) und/oder D₆ (Dodekamethylzyklohexasiloxan), wobei D₄ und/oder D₅ besonders bevorzugt sind, und D₅ am meisten bevorzugt ist, so liegt eine weitere bevorzugte Ausführungsform der Erfindung vor.

Wenn im Rahmen der Erfindung zyklische Polyorganosiloxane, insbesondere zyklisch-verzweigte Siloxane vom DT-Typ eingesetzt werden, vorzugsweise
i. Mischungen zyklischer-verzweigter Siloxane vom D/T-Typ, die (vorzugsweise ausschließlich) aus D- und T-Einheiten aufweisenden Siloxanen bestehen und deren mit ²⁹Si-NMR-Spektroskopie bestimmbarer summarischer Anteil der in der Siloxanmatrix vorhandenen D- und T-Einheiten, die Si-Alkoxy- und/oder SiOH-Gruppen aufweisen, ≤ 2 Molprozent, bevorzugt kleiner 1 Molprozent ist, und die bevorzugt zumindest 5 Gewichtsprozent Siloxanzyklen, wie vorzugsweise Oktamethylzyklotetrasiloxan (D₄), Dekamethylzyckopentasiloxan (D₅) und/oder deren Mischungen enthalten oder aber
ii. Mischungen zyklischer-verzweigter, (vorzugsweise ausschließlich) D- und T-Einheiten aufweisender Siloxane deren mit ²⁹Si-NMR-Spektroskopie bestimmbarer summarischer Anteil der in der Siloxanmatrix vorhandenen D- und T-Einheiten, die Si-Alkoxy- und/oder SiOH-Gruppen aufweisen, größer 2 und kleiner 10 Molprozent sind,
so liegt eine weitere bevorzugte Ausführungsform der Erfindung vor.

Gemäß einer bevorzugten Ausführungsform der Erfindung findet das Erwärmen bei einer Temperatur von 40 °C bis 180 °C besonders bevorzugt von 80 °C bis 150 °C für eine Zeit stattfindet, die zum Bilden des nichtzyklischen alkoxyfunktionellen Siloxans erreicht.

Vorzugsweise sind die Bestandteile (A) und (B) in solchen Mengen vorhanden, dass das Molverhältnis von (A)/(B) mindestens 1:1, bevorzugt mindestens 2:1 beträgt.

Das erfindungsgemäße Verfahren ist dadurch gekennzeichnet, dass der Bestandteil (C) vorzugsweise in einer Menge von 0,1 Mol-% bis 5 Mol-%, bevorzugt 0,2 Mol % bis 1 Mol % und besonders bevorzugt 0,5 Mol % bis 1 Mol % bezogen auf die kombinierten Gewichte der Bestandteile (A), (B) und (C), vorhanden ist.

Verfahrenstechnisch und wirtschaftlich ist es nicht bevorzugt, höhere Mengen an Metall-Trifluormethansulfonaten und Brönsted Säuren in dem erfindungsgemäßen Reaktionssystem hinzuzufügen, da man diese spätestens bei der Weiterverarbeitung des gewonnenen alkoxyfunktionellen Siloxans auch wieder ggf. entfernen muss.

In einer anderen bevorzugten Ausführungsform bedarf es keiner Zugabe von Wasser.

Ein weiterer Gegenstand der Erfindung ist die Verwendung von Alkoxyfunktionellen Siloxanen, hergestellt unter Einsatz eines Reaktionssystems, wie zuvor beschrieben, zur Herstellung von Polyethersiloxanen, insbesondere für die Herstellung von Polyurethanschaumstabilisatoren, Entschäumern, insbesondere Dieselentschäumern, Entlüftern, Netzmitteln, Lack-, Verlaufs- und Dispergieradditiven und/oder Dismulgatoren, Hydrophobierungsmitteln.

Es ist auch vorstellbar, derartig hergestellte Polyethersiloxane, wie zuvor beschrieben, zur Herstellung von Polymerdispersionen; zur Herstellung von Klebstoffen oder Dichtstoffen; zur Oberflächenbehandlung von Fasern, Partikeln oder Flächengebilden, insbesondere zur Ausrüstung oder Imprägnierung von Textilien, zur Herstellung von Papiertüchern, bei der Beschichtung von Füllstoffen; zur Herstellung von Reinigungs- und Pflegeformulierungen für den Haushalt oder für industrielle Anwendungen, insbesondere zur Herstellung von Weichspülmitteln; zur Herstellung von kosmetischen, pharmazeutischen und dermatologischen Zusammensetzungen, insbesondere kosmetischen Reinigungs- und Pflegeformulierungen, Haarbehandlungsmitteln und Haarnachbehandlungsmitteln; zur Reinigung und Pflege von harten Oberflächen; als Prozesshilfsmittel bei der Extrusion von Thermoplasten; zur Herstellung von thermoplastischen Formkörpern; als Adjuvant im Pflanzenschutz; zur Herstellung von Baustoffzusammensetzungen, zu verwenden.

### Beispiele

Die folgenden Beispiele dienen dem Fachmann allein zur Erläuterung dieser Erfindung und stellen keinerlei Beschränkung des beanspruchten Gegenstandes dar. Die Bestimmung der Wassergehalte erfolgt grundsätzlich mit der Karl-Fischer-Methode in Anlehnung an DIN 51777, DGF E-III 10 und DGF C-III 13a. Die ²⁹Si-NMR-Spektroskopie diente in allen Beispielen der Reaktionsverfolgung.

Die ²⁹Si-NMR-Proben werden im Rahmen dieser Erfindung bei einer Messfrequenz von 79,49 MHz in einem Bruker Avance III Spektrometer, das mit einem Probenkopf 287430 mit 10 mm Spaltbreite ausgestattet ist, bei 22°C gelöst in CDCl3 und gegen Tetramethylsilan (TMS) als externem Standard[δ(²⁹Si) = 0,0 ppm] gemessen.

Die GPC's (Gel-Permeations-Chromatographie) werden unter Verwendung von THF als mobiler Phase an einer Säulenkombination SDV 1000/10000A, Länge 65 cm, ID 0,80 bei einer Temperatur von 30°C an einem SECcurity² GPC System 1260 (PSS Polymer Standards Service GmbH) aufgenommen.

Die Gaschromatogramme werden an einem GC-Gerät des Typs GC 7890B der Fa. Agilent Technologies ausgestattet mit einer Säule vom Typ HP-1; 30m × 0,32mm ID × 0,25µm dF (Agilent Technologies Nr. 19091Z-413E) und Wasserstoff als Trägergas mit folgenden Parametern aufgenommen:
Detektor: FID; 310°C
Injektor: Split; 290°C
Mode: constant flow 2 mL/min
Temperaturprogramm: 60°C mit 8°C/min -150°C mit 40°C/min - 300°C 10 min.

Soweit nicht anders gesagt, sind alle Angaben in Gewichtsprozent zu verstehen.

### Beispiele:

### I. Erfindungsgemäßes Verfahren zur Herstellung eines nichtcyclischen alkoxyfunktionellen Polysiloxans

### Beispiel 1A.

In einem 500-ml-Vierhalsrundkolben mit KPG-Rührer, Innenthermometer und aufgesetztem Rückflusskühler werden 327,2g (4,4 mol an D Einheiten) eines Zyklengemisches D4/D5 erhältlich bei der Firma Dow mit 72,8g (0,5 mol) Diethoxydimethylsilan (Dynasylan 9811, Fa. Evonik) unter Rühren bei 23°C vorgelegt. In einem zweiten Schritt wird sequentiell 0,8g Kalium Triflate und 0,8g Methansulfonsäure dem Reaktionsgemisch zugegeben. Anschließend wird das Gemisch auf 140°C aufgeheizt und 6 Stunden bei Reaktionstemperatur gehalten. Nach der Reaktionszeit wird der Reaktionsansatz auf 23°C abkühlen. Nach Abkühlen des Reaktionsgemisches erhält man ein klares oranges α-ω Diethoxypolysiloxan.

Erhalten wird somit ein klares terminales α-ω Diethoxypolysiloxan erhalten, dessen Zielstruktur durch die begleitende ²⁹Si-NMR-Spektroskopie belegt wird. Gleichfalls sichert die ²⁹Si-NMR-Spektroskopie ab, dass im Rahmen der Messgenauigkeit keinerlei Anteile von SiOH Gruppen zugegen sind.

### Beispiel 1B.

In einem 500-ml-Vierhalsrundkolben mit KPG-Rührer, Innenthermometer und aufgesetztem Rückflusskühler werden 327,2g (4,4 mol an D Einheiten) eines Zyklengemisches D4/D5 erhältlich bei der Firma Dow mit 72,8g (0,5 mol) Diethoxydimethylsilan (Dynasylan 9811, Fa. Evonik) unter Rühren bei 23°C vorgelegt. In einem zweiten Schritt wird sequentiell 0,8g Kalium Triflate, 0,8g Methansulfonsäure und 0,2g Wasser dem Reaktionsgemisch zugegeben. Anschließend wird das Gemisch auf 140°C aufgeheizt und 6 Stunden bei Reaktionstemperatur gehalten. Nach der Reaktionszeit wird der Reaktionsansatz auf 23°C abkühlen. Nach Abkühlen des Reaktionsgemisches erhält man ein klares gelbes α-ω Diethoxypolysiloxan.

Erhalten wird somit ein klares terminales α-ω Diethoxypolysiloxan erhalten, dessen Zielstruktur durch die begleitende ²⁹Si-NMR-Spektroskopie belegt wird. Gleichfalls sichert die ²⁹Si-NMR-Spektroskopie ab, dass im Rahmen der Messgenauigkeit keinerlei Anteile von SiOH Gruppen zugegen sind.

### Beispiel 1C.

In einem 500-ml-Vierhalsrundkolben mit KPG-Rührer, Innenthermometer und aufgesetztem Rückflusskühler werden 327,2g (4,4 mol an D Einheiten) eines Zyklengemisches D4/D5 erhältlich bei der Firma Dow mit 72,8g (0,5 mol) Diethoxydimethylsilan (Dynasylan 9811, Fa. Evonik) unter Rühren bei 23°C vorgelegt. In einem zweiten Schritt wird sequentiell 0,8g Natrium Triflate und 0,8g Methansulfonsäure dem Reaktionsgemisch zugegeben. Anschließend wird das Gemisch auf 140°C aufgeheizt und 6 Stunden bei Reaktionstemperatur gehalten. Nach der Reaktionszeit wird der Reaktionsansatz auf 23°C abkühlen. Nach Abkühlen des Reaktionsgemisches erhält man ein klares farbloses α-ω Diethoxypolysiloxan.

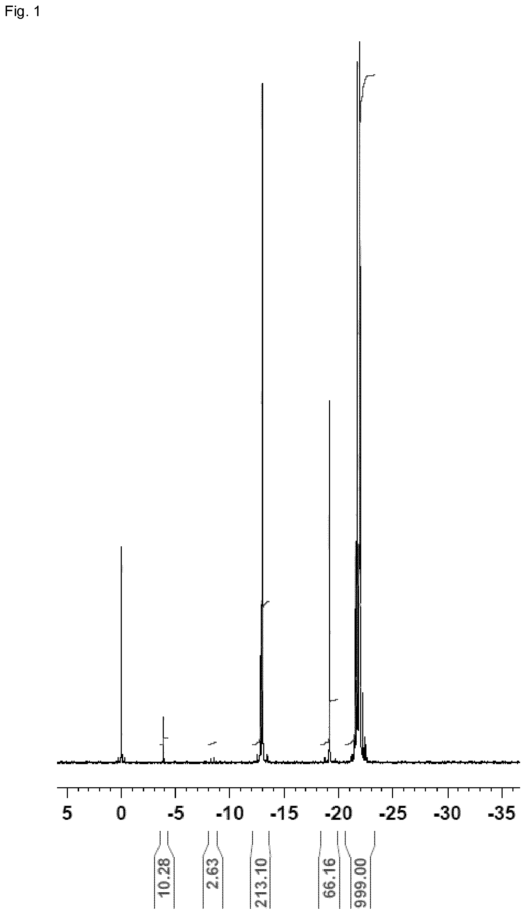

Erhalten wird somit ein klares terminales α-ω Diethoxypolysiloxan erhalten, dessen Zielstruktur durch die begleitende ²⁹Si-NMR-Spektroskopie belegt wird. Gleichfalls sichert die ²⁹Si-NMR-Spektroskopie ab, dass im Rahmen der Messgenauigkeit keinerlei Anteile von SiOH Gruppen zugegen sind. (Fig. 1)

Fig. 1: Im ²⁹Si-NMR-Spektrum kann man das Signal bei - 13ppm der Ethoxygruppen zuordnen. Bei - 22ppm erkennt man die Polysiloxankette.

### Beispiel 1.D.

In einem 500-ml-Vierhalsrundkolben mit KPG-Rührer, Innenthermometer und aufgesetztem Rückflusskühler werden 327,2g (4,4 mol an D Einheiten) eines Zyklengemisches D4/D5 erhältlich bei der Firma Dow mit 72,8g (0,5 mol) Diethoxydimethylsilan (Dynasylan 9811, Fa. Evonik) unter Rühren bei 23°C vorgelegt. In einem zweiten Schritt wird sequentiell 0,8g Natrium Triflate, 0,8g Methansulfonsäure und 0,2g Wasser dem Reaktionsgemisch zugegeben. Anschließend wird das Gemisch auf 140°C aufgeheizt und 6 Stunden bei Reaktionstemperatur gehalten. Nach der Reaktionszeit wird der Reaktionsansatz auf 23°C abkühlen. Nach Abkühlen des Reaktionsgemisches erhält man ein klares gelbes α-ω Diethoxypolysiloxan.

Erhalten wird somit ein klares terminales α-ω Diethoxypolysiloxan erhalten, dessen Zielstruktur durch die begleitende ²⁹Si-NMR-Spektroskopie belegt wird. Gleichfalls sichert die ²⁹Si-NMR-Spektroskopie ab, dass im Rahmen der Messgenauigkeit keinerlei Anteile von SiOH Gruppen zugegen sind.

### II. Verfahren zur Herstellung eines nichtcyclischen alkoxyfunktionellen Siloxans unter Verwendung von Na-Triflaten oder K-Triflaten

### Beispiel 2A

In einem 500-ml-Vierhalsrundkolben mit KPG-Rührer, Innenthermometer und aufgesetztem Rückflusskühler werden 327,2g (4,4 mol an D Einheiten) eines Zyklengemisches D4/D5 erhältlich bei der Firma Dow mit 72,8g (0,5 mol) Diethoxydimethylsilan (Dynasylan 9811, Fa. Evonik) unter Rühren bei 23°C vorgelegt. In einem zweiten Schritt wird 0,8g Kalium Triflat dem Reaktionsgemisch zugegeben. Anschließend wird das Gemisch auf 140°C aufgeheizt und 6 Stunden bei Reaktionstemperatur gehalten. Nach der Reaktionszeit wird der Reaktionsansatz auf 23°C abkühlen. Nach Abkühlen des Reaktionsgemisches erhält man ein klares gelbes Gemisch aus D4/D5 und Diethoxydimethylsilan.

Erhalten wird kein terminales α-ω Diethoxypolysiloxan erhalten, dessen Beweis durch die begleitende ²⁹Si-NMR-Spektroskopie belegt wird.

### Beispiel 2B

In einem 500-ml-Vierhalsrundkolben mit KPG-Rührer, Innenthermometer und aufgesetztem Rückflusskühler werden 327,2g (4,4 mol an D Einheiten) eines Zyklengemisches D4/D5 erhältlich bei der Firma Dow mit 72,8g (0,5 mol) Diethoxydimethylsilan (Dynasylan 9811, Fa. Evonik) unter Rühren bei 23°C vorgelegt. In einem zweiten Schritt wird 0,8g Natrium Triflat dem Reaktionsgemisch zugegeben. Anschließend wird das Gemisch auf 140°C aufgeheizt und 6 Stunden bei Reaktionstemperatur gehalten. Nach der Reaktionszeit wird der Reaktionsansatz auf 23°C abkühlen. Nach Abkühlen des Reaktionsgemisches erhält man ein klares gelbes Gemisch aus D4/D5 und Diethoxydimethylsilan.

Erhalten wird kein terminales α-ω Diethoxypolysiloxan erhalten, dessen Beweis durch die begleitende ²⁹Si-NMR-Spektroskopie belegt wird.

### III. Verfahren zur Herstellung eines nichtcyclischen alkoxyfunktionellen Siloxans unter Verwendung von MSS

### Beispiel 3A

In einem 500-ml-Vierhalsrundkolben mit KPG-Rührer, Innenthermometer und aufgesetztem Rückflusskühler werden 327,2g (4,4 mol an D Einheiten) eines Zyklengemisches D4/D5 erhältlich bei der Firma Dow mit 72,8g (0,5 mol) Diethoxydimethylsilan (Dynasylan 9811, Fa. Evonik) unter Rühren bei 23°C vorgelegt. In einem zweiten Schritt wird 0,8g Methansulfonsäure dem Reaktionsgemisch zugegeben. Anschließend wird das Gemisch auf 140°C aufgeheizt und 6 Stunden bei Reaktionstemperatur gehalten. Nach der Reaktionszeit wird der Reaktionsansatz auf 23°C abkühlen. Nach Abkühlen des Reaktionsgemisches erhält man ein klares gelbes Gemisch aus D4/D5 und Diethoxydimethylsilan.

Erhalten wird kein terminales α-ω Diethoxypolysiloxan erhalten, dessen Beweis durch die begleitende ²⁹Si-NMR-Spektroskopie belegt wird.

### Beispiel 3B

In einem 500-ml-Vierhalsrundkolben mit KPG-Rührer, Innenthermometer und aufgesetztem Rückflusskühler werden 327,2g (4,4 mol an D Einheiten) eines Zyklengemisches D4/D5 erhältlich bei der Firma Dow mit 72,8g (0,5 mol) Diethoxydimethylsilan (Dynasylan 9811, Fa. Evonik) unter Rühren bei 23°C vorgelegt. In einem zweiten Schritt wird sequentiell 0,8g Methansulfonsäure und 0,2g Wasser dem Reaktionsgemisch zugegeben. Anschließend wird das Gemisch auf 140°C aufgeheizt und 6 Stunden bei Reaktionstemperatur gehalten. Nach der Reaktionszeit wird der Reaktionsansatz auf 23°C abkühlen. Nach Abkühlen des Reaktionsgemisches erhält man ein klares gelbes Gemisch aus D4/D5 und Diethoxydimethylsilan.

Erhalten wird kein terminales α-ω Diethoxypolysiloxan erhalten, dessen Beweis durch die begleitende ²⁹Si-NMR-Spektroskopie belegt wird.

## Patentansprüche

1. Verfahren zur Herstellung eines Reaktionsprodukts, das ein nichtcyclisches alkoxyfunktionelles Polysiloxan enthält, durch Erwärmen eines Reaktionssystems umfassend:
(A) ein zyklisches Polyorganosiloxan der Formel [(R¹₂SiO)_{2/2}]ₙ, wobei das tiefgestellte n eine ganze Zahl von mindestens 4 ist und jedes R¹ eine Alkylgruppe oder Arylgruppe ist;
(B) ein Silan der Formel R²₍₄₋ₘ₎Si(OR³)ₘ, wobei das tiefgestellte m eine ganze Zahl von 1 bis 4 ist, jedes R² unabhängig eine Alkylgruppe oder Arylgruppe, eine Hydrocarbylgruppe oder eine halogenierte Hydrocarbylgruppe ist und jedes R³ unabhängig eine Alkylgruppe ist; und
(C) ein Katalysatorsystem umfassend ein Metall-Trifluormethansulfonat der Formel [M]⁺[CF₃SO₃]⁻, wobei M ein Metallatom ist, ausgewählt aus Natrium (Na) und Kalium (K) und eine Brönsted Säure,
wobei Brönsted Säuren mit einem pKa-Wert ≤ 3,0, bevorzugt mit einem pKa-Wert ≤ 2,0, besonders bevorzugt mit einem pKa-Wert ≤ - 0,0 eingesetzt werden.

2. Verfahren nach Anspruch 1, **dadurch gekennzeichnet, dass** das molare Mengenverhältnis von eingesetzter Brönsted Säure zu Metall-Trifluormethansulfonat im Bereich von 1:10 bis 10:1, bevorzugt von 1:5 bis 5:1 besonders bevorzugt von1:2 bis 2:1.

3. Verfahren nach Anspruch 1 oder 2, **dadurch gekennzeichnet, dass** es sich bei der Brönsted Säure um Carbonsäuren, wie beispielsweise Trifluoressigsäure Sulfonsäuren, wie beispielsweise Methansulfonsäure, p-Toluosulfonsäure und Dodecylbenzolsulfonsäure, Mineralsäuren, wie beispielsweise Salzsäure, Salpetersäure, Schwefelsäure und Phosphorsäure handelt.

4. Verfahren nach einem der vorgenannten Ansprüche, **dadurch gekennzeichnet, dass** es sich bei den Silanen um Dimethyldialkoxysilane, ausgewählt aus Diethoxydimethylsilan und Dimethoxydimethylsilan, Methyltrialkoxysilane ausgewählt aus Triethoxymethylsilan und Trimethoxymethylsilane, und Tetraalkoxysilane ausgewählt aus Tetraethoxysilan und Tetramethoxysilan handelt.

5. Verfahren nach einem der vorgenannten Ansprüche, **dadurch gekennzeichnet, dass** die cyclischen Polyorganosiloxane ausgewählt ist aus D₄ (Octamethylzyklotetrasiloxan), D₅ (Dekamethylzyklopentasiloxan) und/oder D₆ (Dodekamethylzyklohexasiloxan), wobei D₄ und/oder D₅ besonders bevorzugt sind, und D₅ am meisten bevorzugt ist, eingesetzt werden.

6. Verfahren nach einem der vorgenannten Ansprüche, **dadurch gekennzeichnet, dass** es sich bei den cyclischen Polyorganosiloxanen um zyklisch-verzweigte Polyorganosiloxane vom DT-Typ handelt, vorzugsweise
i) Mischungen zyklischer-verzweigter Siloxane vom D/T-Typ, die aus D- und T-Einheiten aufweisenden Siloxanen bestehen und deren mit ²⁹Si-NMR-Spektroskopie bestimmbarer summarischer Anteil der in der Siloxanmatrix vorhandenen D- und T-Einheiten, die Si-Alkoxy- und/oder SiOH-Gruppen aufweisen, ≤ 2 Molprozent, bevorzugt kleiner 1 Molprozent ist, und die bevorzugt zumindest 5 Gewichtsprozent Siloxanzyklen, wie vorzugsweise Oktamethylzyklotetrasiloxan (D₄), Dekamethylzyklopentasiloxan (D₅) und/oder deren Mischungen enthalten oder aber
ii) Mischungen zyklischer-verzweigter, D- und T-Einheiten aufweisender Siloxane deren mit ²⁹Si-NMR-Spektroskopie bestimmbarer summarischer Anteil der in der Siloxanmatrix vorhandenen D- und T-Einheiten, die Si-Alkoxy- und/oder SiOH-Gruppen aufweisen, größer 2 und kleiner 10 Molprozent sind.

7. Verfahren nach einem der vorgenannten Ansprüche, wobei das Erwärmen bei einer Temperatur von 40 °C bis 180 °C besonders bevorzugt von 80 °C bis 150 °C für eine Zeit stattfindet, die zum Bilden des nichtzyklischen alkoxyfunktionellen Siloxans erreicht.

8. Verfahren nach einem der vorgenannten Ansprüche, wobei die Bestandteile (A) und (B) in solchen Mengen vorhanden sind, dass das Molverhältnis von (A)/(B) mindestens 1:1, bevorzugt mindestens 2:1 beträgt.

9. Verfahren nach einem der vorgenannten Ansprüche, wobei der Bestandteil (C) in einer Menge 0,1 Mol-% bis 5 Mol-%, bevorzugt 0,2 Mol % bis 1 Mol % und besonders bevorzugt 0,5 Mol % bis 1 Mol % bezogen auf die kombinierten Gewichte der Bestandteile (A), (B) und (C), vorhanden ist.

10. Verfahren nach einem der vorgenannten Ansprüche, wobei die Zugabe von Wasser nicht erforderlich ist.

## Claims

1. Process for producing a reaction product containing a non-cyclic alkoxy-functional polysiloxane by means of heating a reaction system comprising:
(A) a cyclic polyorganosiloxane of the formula [(R¹₂SiO)_{2/2}]ₙ, where the subscript n is an integer of at least 4 and each R¹ is an alkyl group or aryl group;
(B) a silane of the formula R²₍₄₋ₘ₎Si(OR³)ₘ, where the subscript m is an integer from 1 to 4, each R² independently is an alkyl group or aryl group, a hydrocarbyl group or a halogenated hydrocarbyl group and each R³ independently is an alkyl group; and
(C) a catalyst system comprising a metal trifluoromethanesulfonate of the formula [M]⁺[CF₃SO₃]⁻, where M is a metal atom selected from sodium (Na) and potassium (K), and a Bronsted acid,
wherein Bronsted acids having a pKa ≤ 3.0, preferably having a pKa ≤ 2.0, particularly preferably having a pKa ≤ - 0.0 are used.

2. Process according to Claim 1, **characterized in that** the molar ratio of Bronsted acid used to metal trifluoromethanesulfonate in the range from 1:10 to 10:1, preferably from 1:5 to 5:1, particularly preferably from 1:2 to 2:1.

3. Process according to Claim 1 or 2, **characterized in that** the Bronsted acid is carboxylic acids such as for example trifluoroacetic acid, sulfonic acids such as for example methanesulfonic acid, p-toluenesulfonic acid and dodecylbenzenesulfonic acid, mineral acids such as for example hydrochloric acid, nitric acid, sulfuric acid and phosphoric acid.

4. Process according to any of the preceding claims, **characterized in that** the silanes are dimethyldialkoxysilanes selected from diethoxydimethylsilane and dimethoxydimethylsilane, methyltrialkoxysilanes selected from triethoxymethylsilane and trimethoxymethylsilane, and tetraalkoxysilanes selected from tetraethoxysilane and tetramethoxysilane.

5. Process according to any of the preceding claims, **characterized in that** the cyclic polyorganosiloxanes is selected from D₄ (octamethylcyclotetrasiloxane), D₅ (decamethylcyclopentasiloxane) and/or D₆ (dodecamethylcyclohexasiloxane), where D₄ and/or D₅ are particularly preferred, and D₅ is most preferred, are used.

6. Process according to any of the preceding claims, **characterized in that** the cyclic polyorganosiloxanes are cyclic branched polyorganosiloxanes of the DT type, preferably
i) mixtures of cyclic branched siloxanes of the D/T type which consist of siloxanes having D and T units and whose cumulative proportion of D and T units present in the siloxane matrix and having Si-alkoxy and/or SiOH groups, determinable by ²⁹Si NMR spectroscopy, is ≤ 2 mole per cent, preferably less than 1 mole per cent, and which preferably contain at least 5 per cent by weight of siloxane cycles, such as preferably octamethylcyclotetrasiloxane (D₄), decamethylcyclopentasiloxane (D₅) and/or mixtures of these or else
ii) mixtures of cyclic branched siloxanes having D and T units whose cumulative proportion of D and T units present in the siloxane matrix and having Si-alkoxy and/or SiOH groups, determinable by ²⁹Si NMR spectroscopy, is greater than 2 and less than 10 mole per cent.

7. Process according to any of the preceding claims, wherein the heating takes place at a temperature of 40°C to 180°C, particularly preferably of 80°C to 150°C, for a time which suffices for the formation of the non-cyclic alkoxy-functional siloxane.

8. Process according to any of the preceding claims, wherein the constituents (A) and (B) are present in amounts such that the molar ratio of (A)/(B) is at least 1:1, preferably at least 2:1.

9. Process according to any of the preceding claims, wherein the constituent (C) is present in an amount of 0.1 mol% to 5 mol%, preferably 0.2 mol% to 1 mol% and particularly preferably 0.5 mol% to 1 mol%, based on the combined weights of the constituents (A), (B) and (C).

10. Process according to any of the preceding claims, wherein the addition of water is not required.

## Revendications

1. Procédé de préparation d'un produit de réaction, qui contient un polysiloxane non cyclique à fonctionnalité alcoxy, par chauffage d'un système de réaction comprenant :
(A) un polyorganosiloxane cyclique de formule [(R¹₂SiO)_{2/2}]ₙ, l'indice n représentant un nombre entier d'au moins 4 et chaque R¹ représentant un groupe alkyle ou un groupe aryle ;
(B) un silane de formule R²₍₄₋ₘ₎Si(OR³)ₘ, l'indice m représentant un nombre entier de 1 à 4, chaque R² représentant, indépendamment, un groupe alkyle ou un groupe aryle, un groupe hydrocarbyle ou un groupe hydrocarbyle halogéné et chaque R³ représentant, indépendamment, un groupe alkyle ; et
(C) un système catalytique, comprenant un trifluorométhanesulfonate métallique de formule [M]⁺[CF₃SO₃]⁻, M représentant un atome métallique choisi parmi le sodium (Na) et le potassium (K) et un acide de Brönstedt,
des acides de Brönstedt présentant une valeur pKa ≤ 3,0, de préférence une valeur pKa ≤ 2,0, de manière particulièrement préférée une valeur pKa ≤ -0,0 étant utilisés.

2. Procédé selon la revendication 1, **caractérisé en ce que** le rapport des quantités molaires de l'acide de Brönstedt utilisé au trifluorométhanesulfonate métallique dans la plage de 1:10 à 10:1, de préférence de 1:5 à 5:1, de manière particulièrement préférée de 1:2 à 2:1.

3. Procédé selon la revendication 1 ou 2, **caractérisé en ce qu'**il s'agit, pour l'acide de Brönstedt, d'acides carboxyliques tels que par exemple l'acide trifluoroacétique, d'acides sulfoniques, tels que par exemple l'acide méthanesulfonique, l'acide p-toluènesulfonique et l'acide dodécylbenzènesulfonique, d'acides minéraux, tels que par exemple l'acide chlorhydrique, l'acide nitrique, l'acide sulfurique et l'acide phosphorique.

4. Procédé selon l'une des revendications précédentes, **caractérisé en ce qu'**il s'agit, pour les silanes, de diméthyldialcoxysilanes, choisis parmi le diéthoxydiméthylsilane et le diméthoxydiméthylsilane, de méthyltrialcoxysilanes choisis parmi le triéthoxyméthylsilane et le triméthoxyméthylsilane, et de tétraalcoxysilanes choisis parmi le tétraéthoxysilane et le tétraméthoxysilane.

5. Procédé selon l'une des revendications précédentes, **caractérisé en ce que** les polyorganosiloxanes cycliques est choisi parmi le D₄ (octaméthylcyclotétrasiloxane), le D₅ (décaméthylcyclopentasiloxane) et/ou le D₆ (dodécaméthylcyclohexasiloxane), le D₄ et/ou le D₅ étant particulièrement préférés et D₅ étant le plus préféré, sont utilisés.

6. Procédé selon l'une des revendications précédentes, **caractérisé en ce qu'**il s'agit, pour les polyorganosiloxanes cycliques, de polyorganosiloxanes cycliques-ramifiés du type DT, de préférence de
i) mélanges de siloxanes cycliques-ramifiés du type D/T, qui sont de préférence constitués de siloxanes présentant des motifs D et T, dont la proportion sous forme de somme, pouvant être déterminée par spectroscopie ²⁹Si-RMN, des motifs D et T présents dans la matrice de siloxane, qui présentent des groupes Si-alcoxy et/ou SiOH, est ≤ 2% en mole, de préférence inférieure à 1% en mole et qui contiennent de préférence au moins 5% en poids de cycles siloxane, tels que de préférence l'octaméthylcyclotétrasiloxane (D₄), le décaméthylcyclopentasiloxane (D₅) et/ou leurs mélanges ou
ii) mélanges de siloxanes cycliques-ramifiés, présentant des motifs D et T, dont la proportion sous forme de somme, pouvant être déterminée par spectroscopie ²⁹Si-RMN, des motifs D et T présents dans la matrice de siloxane, qui présentent des groupes Si-alcoxy et/ou SiOH, est supérieure à 2 et inférieure à 10% en mole.

7. Procédé selon l'une des revendications précédentes, le chauffage ayant lieu à une température de 40°C à 180°C, de manière particulièrement préférée de 80°C à 150°C pendant un temps qui suffit pour la formation du siloxane à fonctionnalité alcoxy non cyclique.

8. Procédé selon l'une des revendications précédentes, les constituants (A) et (B) étant présents en des quantités telles que le rapport molaire de (A)/(B) est d'au moins 1:1, de préférence d'au moins 2:1.

9. Procédé selon l'une des revendications précédentes, le constituant (C) étant présent en une quantité de 0,1% en mole à 5% en mole, de préférence de 0,2% en mole à 1% en mole et de manière particulièrement préférée de 0,5% en mole à 1% en mole par rapport aux poids combinés des constituants (A), (B) et (C).

10. Procédé selon l'une des revendications précédentes, l'ajout d'eau n'étant pas nécessaire.
